# EUROPEAN PATENT APPLICATION

(11) **EP 4 439 354 A1**
(43) Date of publication of application: **02.10.2024**
(21) Application number: 23164954.2
(22) Date of filing: 29.03.2023
(51) Int. Cl.: G06F 21/57

(54) **SIGNED SOFTWARE PRODUCT VULNERABILITY INFORMATION**

(71) Applicant: Siemens Aktiengesellschaft, 80333 München (DE)
(72) Inventor: Kasinathan, Prabhakaran, 81549 München (DE); Caselli, Marco, 80336 München (DE); Shams, Saad Bin, 81549 München (DE); Wimmer, Martin, 85579 Neubiberg (DE); Paulsen, Christian, 38176 Wendeburg (DE)
(74) Representative: Siemens Patent Attorneys

(57) **Abstract**

System and Computer-implemented method for trusted disclosure of vulnerability information to a software SW product, comprising
a) receiving (S1), by the SW vendor unit (12), a proof request from a user unit (11) to provide information on vulnerabilities of the SW product,
b1) requesting (S2), by the SW vendor unit (12), an evaluation of the SW product with respect to the requested information on vulnerabilities of all SW components indicated in a Software bill of materials data structure (SBOM) by sending the Software bill of material data structure (SBOM) comprising an indicator for each SW component contained in the SW product to a certification unit (13),
c1) receiving (S3), by the SW vendor unit (12), a verifiable credential comprising a result of the evaluation and a cryptographic proof issued from the certification unit (13), or b2) retrieve (S2'), by the SW vendor unit (12), a previously received and stored verifiable credential issued from the certification unit (13) comprising the result of the evaluation and a cryptographic proof,
d) forwarding (S4), by the SW vendor unit (12), the cryptographical proof to the user unit (11),
e) requesting (S5), by the user unit (11), a public information to validate the cryptographic proof received from the SW vendor unit, from a distributed database (14), and
f) validating (S6), by the user unit (11), the cryptographic proof request from the SW vendor unit (12) about vulnerabilities in the software product using the public information from the distributed database (14).

## Description

The present invention relates to a system and a computer-implemented method for trusted disclosure of vulnerability information to a software product, as well as a computer program product.

Nowadays many Software (SW) products contain both software written in-house and as well as software such as open-source software (OSS) or licensed software, which is provided by other entities, i.e., software suppliers. The list of software components included in a product is known as Software Bill of Materials (SBOM). A SBOM is usually considered confidential depending on the type of product. An example of machine readable, standardized form of SBOM can be found here: https://github.com/CycloneDX/bom-examples/blob/master/SBOM/juice-shop-11.1.2/bom.json

If one of the SW components for instance, has a vulnerable piece of code, and if an attacker finds a way to exploit it, it becomes a Zero-Day vulnerability. Thus, SW vendors do not want to share their complete list of SW components for a SW product to customers or outsiders, as it might offer information for potential adversaries and, hence, can put business models at risk.

However, as part of a traditional security process, software vendors are obliged to disclose vulnerabilities that exist in their products such as zero-day vulnerabilities. Usually, the software vendors create a hotfix or patch to rectify such open zero-day vulnerabilities and release it. After releasing the patch, the vulnerabilities are disclosed, e.g., in form of Vulnerability Exploitability exchange (VEX) to applicants of the SW product, see e.g., "Vulnerability Exploitability exchange
(VEX) - Use Cases", Publication date: April 2022, VEX Working Group of the NTIA Multistakeholder Process and the Framing Working Group https://www.cisa.gov/sites/default/files/publications/VEX Use Cases Aprill2022.pdf. A VEX document is a form of a security advisory that indicates whether a product or products are affected by a known vulnerability or vulnerabilities.

This process is regularly audited based on cybersecurity regulations such as ISO processes. Thus, when SW products are certified (e.g., ISO 2700x), customers have some confidence that the software vendor will make them aware of such problems and hopefully provide a patch within a given timeframe after the software issue has been notified to them.

However, this process is not very transparent and not accessible in real-time and leaves SW products vulnerable to attacks for an undue period of time. If there is an audit, then the software vendor shall disclose such information to concerned parties.

It is therefore an objective of the present invention to exchange information on vulnerabilities of a SW product in a simple and transparent way without disclosure of all components comprised in a SW product to the public.

The objective is solved by the features of the independent claims. The dependent claims contain further developments of the invention.

A first aspect of the invention concerns a computer-implemented method for trusted disclosure of vulnerability information to a software product, comprising
a) receiving, by the SW vendor unit, a cryptographic proof request from a user unit to provide information on vulnerabilities of the SW product,
b1) requesting, by the SW vendor unit, an evaluation of the SW product with respect to the requested information on vulnerabilities of all the SW components indicated in a Software bill of materials data structure by sending the Software bill of material SBOM data structure comprising an indicator for each SW component contained in the software product to a certification unit,
c1) receiving, by the SW vendor unit, a verifiable credential comprising the result of the evaluation and a cryptographic proof issued from the certification authority, or
b2) providing a previously received verifiable credential issued from the certification unit comprising the result of the evaluation and a cryptographic proof,
d) forwarding, by the SW vendor unit, the cryptographic proof to the user unit,
e) requesting, by the user unit, a public information to validate the cryptographic proof received from the SW vendor unit, from a distributed database, and
f) validating, by the user unit, the proof request from the SW vendor about vulnerabilities in the software product using the public information from the distributed database.

Via the user unit a user or owner of the SW product can query information on vulnerabilities of the SW product from the SW vendor, e.g., whether the SW product is affected by a vulnerability or not. Nevertheless, the user unit does not rely on the trustworthiness of the SW vendor but by validating the proof, it can check that the vulnerability information was issued by the certification authority.

The SBOM data structure containing the information on all SW components of the SW product need not be disclosed to the user unit but only to the certification authority. This reduces the group of parties knowing the SW components in the SW product and therefore it reduces the possibilities of exploiting zero-day vulnerabilities of the SW product and avoids the release of confidential corporate proprietary information about the product design.

Requesting the public information from the distributed database enhances the flexibility in the certification unit processing the evaluation and delivering the proof. The claim is not to be interpreted in a way that the sequence of processing is fixed. Especially the steps of b) requesting an evaluation of the SW product and c) receiving the verifiable credential can be processed before step a) receiving the proof request from the SW vendor unit. In this case, the received verifiable credential comprising the cryptographical proof is stored at the SW vendor unit and the stored proof is forwarded in step d).

In a preferred embodiment the Software bill of material (SBOM) data structure is automatically generated by the SW vendor unit according to a predefined structure.

This accelerates the generation of the SBOM data structure DATA STRUCTURE and allows a standardized and therefore fast evaluation process in the certification authority.

In a preferred embodiment the verifiable credential comprises a time information providing the time when the verifiable credential was issued by the certification unit.

In a preferred embodiment a vulnerability evaluation schema is stored in the distributed database and the vulnerability evaluation schema comprises a list of attributes which have to be provided by the SW vendor unit to the certification unit when requesting the evaluation of the SW product.

In a preferred embodiment the attributes in the vulnerability evaluation schema indicates at least one evaluation action which has to be performed in the certification unit before issuing the verifiable credential.

Such, the attributes in the vulnerability evaluation schema defines the information which have to be provided by the SW vendor unit to receive the verifiable credential from the certification authority. The vulnerability evaluation schema stored in the distributed database can be accessed and provides details on the evaluation actions performed by the certification authority.

In a preferred embodiment the certification unit requests to set up a credential definition by binding a public key of the certification unit to the vulnerability evaluation schema, wherein the credential definition is stored in the distributed database.

The credential definition indicates that the certification unit agrees to conform with the evaluation actions as defined in the vulnerability evaluation schema. Storing the credential definition in the distributed database confirms that the certification unit agrees and evaluates the received evaluation request according to the vulnerability evaluation schema.

In a preferred embodiment the user unit requests public information by sending the credential identifier to the distributed database and receives in response at least the public key of the certification unit to verify the proof.

The user unit receives information on the certification unit which performed the evaluation and optionally further details on the evaluation actions.

In a preferred embodiment the distributed database is configured according to a permissioned distributed database system, wherein the certification unit and the SW vendor unit have access to write into the distributed database, and the user unit has access to read only data from the distributed database.

The public distributed database allows reading access to any user device and facilitates disclosure of vulnerability information to a wide range of user units.

In a preferred embodiment each of the certification unit and the SW vendor unit are identified by decentralized public identifiers, preferably a decentralized identifier.

This enables to use a pre-specified distributed database system, especially according to a Hyperledger Indy specification, for the distributed database.

In a preferred embodiment the SW vendor unit automatically collects all SW components of the SW product and sub-modules of the SW components according to the vulnerability evaluation schema and sends it to the certification unit for validating the Software bill of material SBOM data structure.

Such the request for evaluation can be processed fast.

In a preferred embodiment the certification unit is one out of a group of more than one different certification units, each certification unit having a certification unit specific credential definition data structure and definition identifier respectively comprising the same vulnerability evaluation schema.

This provides the possibility to request evaluation at several certification units. The certificate unit specific definition data structure confirms that the certificate unit has to register and comply to the vulnerability evaluation schema.

In a preferred embodiment the verifiable credential and/or cryptographically protected proof is sent and/or forwarded in a one-to-one direct secure communication channel, or via a 3rd party service.

This reduces attack possibilities during the transmission of the verifiable credential.

In a preferred embodiment the verifiable credential and decentralized identifiers are structured according to a specification of the World Wide Web Consortium (W3C) and/or wherein the certification unit performs actions of an issuer, the SW vendor unit performs actions of a holder, and the user unit performs actions of a verifier as specified by the World Wide Web Consortium (W3C), e.g., according to Verifiable Credentials Data Model v1.1, W3C Recommendation, 03 March 2022.

This facilitates introduction of the method because common processes and actions are already specified. Implementations-of the distributed database are commercially available and require less adaptations to implement the proposed method.

A second aspect of the invention concerns a system for trusted disclosure of vulnerability information to a software product, comprising at least one processor configured to perform the steps according to the above-mentioned claims.

A third aspect concerns a computer program product directly loadable into the internal memory of at least one digital computer, comprising software code portions for performing the steps of the method when said product is run on said at least one digital computer.

Unless indicated otherwise in the description below, the terms "receive", "request", "retrieve", "forward", "validate" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, as well as processors and other electronic devices for data processing.

Within the context of embodiments of the invention, "transfer into the distributed database or distributed database system" and the like can be understood to mean for example that, a transaction or the transactions or a data block with its transactions is conveyed to one or more nodes of a distributed database system. If these transactions are for example validated successfully (e.g., by the node/s), these transactions are concatenated as a new data block with at least one existing data block of the distributed database system. For this purpose, the applicable transactions are stored for example in a new data block. In particular, this validation and/or concatenation can be performed by a trusted node.

Within the context of embodiments of the invention, the SW vendor unit and/or the certification unit are exemplarily configured to execute a smart contract, which can be understood to be, e.g., a program instruction or multiple program instructions, in particular stored in one or more transactions. The program code is in particular executable and is executed in co-operation with the distributed database system, for example. This can be realized by means of an execution environment (e.g., a virtual machine), for example, the execution environment or the program code preferably being Turing complete. The program code is preferably executed by the infrastructure of the distributed database system. This involves for example a virtual machine being realized by the infrastructure of the distributed database system.

Within the context of embodiments of the invention, a "distributed database system", which, by way of example, can also be referred to as a distributed database, can be understood to be, e.g., a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database.

Furthermore, features specific to certain blockchain implementations like channels and private data collections (e.g., of Hyperledger Indy) can be applied to secure sensitive information and also support application-specific use cases. Therefore, the described invention offers more and/or additional processing and routing functionalities using the features of the underlying blockchain technology.

The invention will be explained in more detail by reference to the accompanying figures.
- Fig. 1:: schematically shows an exemplary embodiment of the inventive system;
- Fig. 2:: illustrates an exemplary embodiment of the inventive method for secure provisioning of an application to a device; and
- Fig. 3:: shows an exemplary information flow diagram of the inventive method.

Equivalent parts in the different figures are labeled with the same reference signs.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional units could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method. In the same way, each functional step described for a method can be performed in a functional unit of the related apparatus. A unit can be implemented as a separate device or can be part of a device integrating also further units.

As part of a traditional security process, software vendors are obliged to disclose vulnerabilities that exist in their products such as zero-day vulnerabilities. Usually, the software vendors create a hotfix or patch to rectify such open zero-day vulnerabilities and release it. After releasing the patch, they disclose the vulnerabilities, e.g., in the form of Vulnerability Exploitability exchange (VEX) to their customers and the corresponding patch. So that the customers can patch their systems as early as possible to stop attackers exploiting those software vulnerabilities. The VEX is usually issued by the CERT (Computer Emergency Response Teams) of the company issuing it.

The traditional security process is not very transparent to a SW user or to the outside world in terms of time when such information is delivered to the SW user, how an evaluation of vulnerabilities has been performed and whether the evaluating party is trustful.

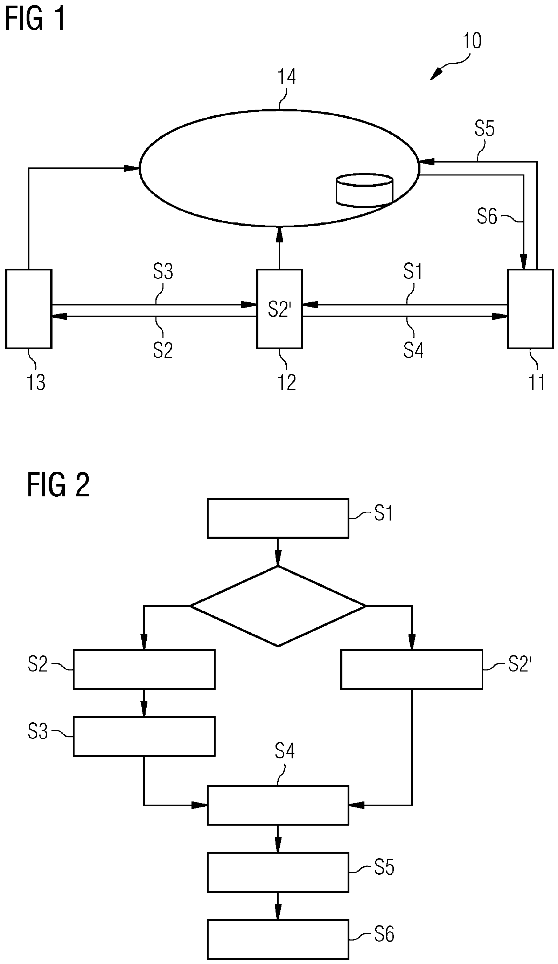

Fig. 1 schematically shows an exemplary embodiment of the inventive system. The system 10 comprises a user unit which requests information whether any vulnerabilities are known of a SW product. The user unit can either be a user device executing the SW product or an administrative device of a customer who owns or applies the SW product. The system 10 comprises a SW vendor unit 12 which is operated by a vendor of the SW product. The system 10 comprises a certification unit 13, e.g., at least one public or private managed certification authority, like TüV, which performs the evaluation of the SW product with respect to vulnerabilities. Further on, the system 10 comprises a distributed database 14.

The distributed database 14 is configured according to a public distributed database system, wherein the certification unit 13 and the SW vendor unit 12 have access to write into the distributed database 14, and the user unit 11 has access to read only data from the distributed database 14. The distributed database 14 is preferably configured according to a decentralized Hyperledger Indy. Hyperledger Indy is a public ledger designed specifically and only for privacy-preserving self-sovereign identities. A Hyperledger Indy ledger is designed specifically to enable the use of verifiable credentials, allowing credential issuers to publish data necessary for issuing verifiable credentials and constructing presentations from those verifiable credentials, see-https://hyperledger.github.io/indy-did-method.

In an embodiment the distributed database comprises an ecosystem providing secure communication network for exchanging data between the units. It is assumed that the certification unit, the SW vendor unit, the user unit, and the distributed database are part of this ecosystem. Each of the certification unit 13 and the SW vendor unit 12 are identified by a decentralized public identifier and registered in the distributed database 14. The decentralized identifier is structured as specified by the World Wide Web Consortium (W3C), e.g., according to Verifiable Credentials Data Model v1.1, W3C Recommendation, 03 March 2022. It is assumed that all registered units trust each other. The verifiable credential and/or cryptographically protected proof is sent and/or forwarded in a one-to-one direct secure communication channel, or via a 3rd party service.

Fig. 2 shows an exemplary embodiment of the inventive method for trusted disclosure of vulnerability information to a software product. Exemplarily the method is performed by the system 10 as described before.

In step S1 the SW vendor unit 12 receives a proof request from the user unit 11 to provide information on vulnerabilities of the SW product.

In step S2 the SW vendor unit 12 requests an evaluation of the SW product with respect to the requested information on vulnerabilities of all SW components indicated in a Software bill of materials data structure. Therefore, the SW vendor unit 12 sends the Software bill of material SBOM data structure comprising an indicator for each SW component contained in the software product to the certification unit 13. In response the SW vendor unit receives a verifiable credential issued from the certification unit 13, see step S3. The verifiable credential comprises a result of the evaluation and a cryptographic proof of the evaluation result. The indicator for a SW component can comprise a complete code of the SW component, a cryptographic representation of the SW component or a name uniquely assigned to the SW component.

If the verifiable credential has previously been requested, received, and stored by the SW vendor unit, e.g., in an internal memory of the SW vendor unit, the stored verifiable credential is provided, see step S2'. In an embodiment the SW vendor requests on release of a new version of the SW product the evaluation to the new version of the SW product with respect to vulnerabilities. The SW vendor sends the Software bill of materials data structure comprising an indicator for each SW component contained in the new version of the SW product to the certification unit 13. The received verifiable credential for the new version of the SW product is stored at the SW vendor unit 12. On receipt of a proof request form the user unit the stored verifiable credential is provided and forwarded to the user unit. This allows a shortened response time to forward the requested proof to the user unit.

The verifiable credential comprises a time information providing the time when the verifiable credential was issued by the certification unit. This time information is forwarded to the user unit to indicate the time of evaluation of the SW product. The evaluation of the SW product is requested by the SW vendor unit either on specific events, like a release of new SW version of the SW product, detection of a new vulnerability or on regular time schedule or on each receipt of a proof request from a user unit 11.

In next step S4, the cryptographical proof is forwarded by the SW vendor unit 12 to the user unit 11. In step S5 the SW vendor unit 12 requests a public information from the distributed database 14 and validates the cryptographic proof with this public information, see step S6.

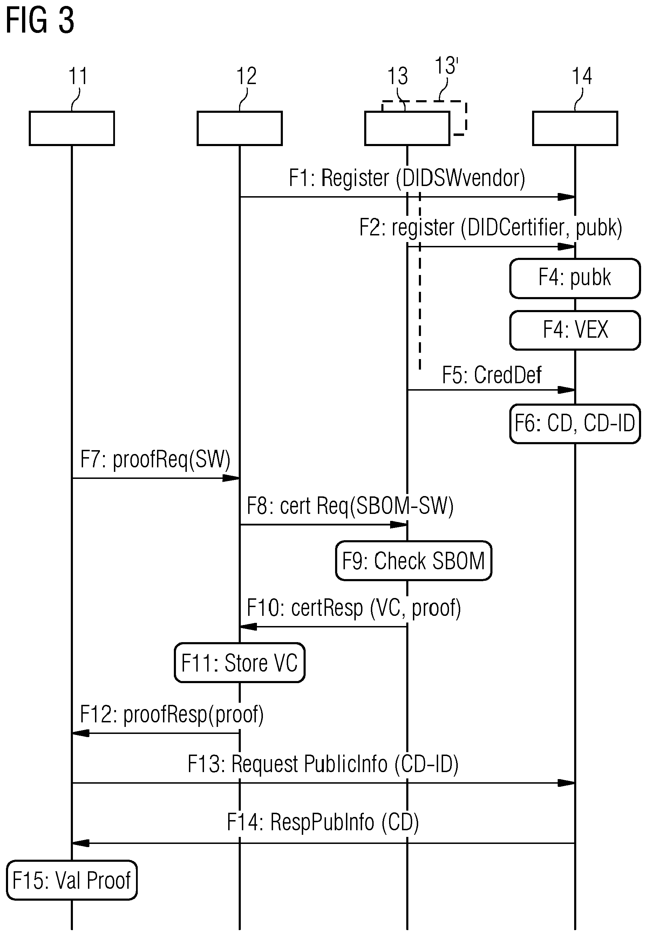

Fig. 3 shows an exemplary information flow diagram of the inventive method. The method is performed exemplarily by the embodiment of the system 10 as shown in Fig.1.

The distributed database 14 is configured according to a public distributed database system, wherein the certification unit 13 and the SW vendor unit 12 have access to write into the distributed database, and the user unit 11 has access to read only data from the distributed database. The certification unit 13 and the SW vendor unit 12 are identified by a public identifier, preferably a decentralized identifier DID. Therefore, the SW vendor unit 12 and the certification unit 13 register at the distributed database 14, see F1, F2. The certification unit 13 provides a public key pubk to the distributed database 14. The public key is used to verify a signature which is generated by applying the related private key of the certification unit 13. The public key pubk is stored with the public identifier of the certification unit 13 in the distributed database, see F3.

A vulnerability evaluation schema VEX is stored in the distributed database, see F4. The vulnerability evaluation schema comprises a list of attributes which have to be provided from the SW vendor unit 12 to the certification unit 13 when requesting the evaluation of the SW product. Preferably, the vulnerability schema is defined by a consortium and agreed by involved certification. The vulnerability evaluation schema VEX indicates at least one evaluation action which has to be performed in the certification unit 13 before issuing the verifiable credential. The certification unit 13 is one out of a group of more than one different certification units 13', each certification unit 13 having a certification unit specific credential definition data structure and definition identifier respectively comprising the same vulnerability evaluation schema.

The certification unit 13 requests to set up a credential definition data structure CD by binding the public key of the certification unit 13 to the vulnerability evaluation schema, see F5. The credential definition data structure CD and a definition identifier CD-ID identifying the credential definition data structure is stored in the distributed database 14, see F6. With storing the credential definition data structure CD, the certification unit 13 agrees to evaluate the SW product as defined in the respective vulnerability evaluation schema VEX. Other certification units 13' can request and setup such a credential definition data structure. This enables different certification units 13, 13' to perform the vulnerability evaluation. Additional operations, e.g., performing a revocation process, are optionally selected at the setup of credential definition. These options are also stored in the distributed database.

After these settings, the SW vendor unit 12 can provide a proof about vulnerability information requested by the user unit 11, as described in Fig. 2. I.e., the user unit 11 requests the evaluation of the SW product, see F6. In an embodiment the SW vendor unit 12 automatically generates the Software bill of material SBOM data structure according to a predefined structure. The SW vendor unit 12 automatically collects all SW components of the SW product and sub-modules of the SW components according to the vulnerability evaluation schema and sends it to the certification unit 13 for validating the Software bill of material data structure SBOM, see F8.

The provided SW product is evaluated according to the vulnerability evaluation schema, see F9, and a verifiable credential VC comprising the evaluation result and a proof is sent back to the SW vendor unit 12, see F10. The verifiable credential VC is stored in the SW vendor unit 12, see F12 and the proof is forwarded to the user unit 11, see F12. The user unit 11 requests a public information from the distributed database 14 by sending the credential definition identifier CD-ID, see F13 and receives in response at least the public key of the certification unit required to verify the proof. Optionally the credential definition data structure including the public key and the vulnerability evaluation schema is returned, see F14. The user unit 11 validates the cryptographic proof using the public information, i.e., the public key of the certification unit 14, see F15 in Fig.3.

The proof request may simply ask the SW vendor unit to prove that they do not use a vulnerable version of a software (e.g., log4j <2.17.1 in java 8) in their SW product. The SW vendor 12 does not need to disclose the entire SBOM data structure to a user unit 11 or a certification authority to prove that their SW product is vulnerable to a vulnerability listed in a Common Vulnerabilities and Exposures CVE system. Such a CVE provides a reference method for publicly known information-security vulnerabilities and exposures. Instead, they can construct a proof i.e., constructing a proof from the VC issued by the certificate unit in the form of a VEX at the current point in time.

For instance, if the SW product in the past had used log4j 2.x and recently fixed the vulnerability by upgrading to log4j v2.17.2, then the SW vendor unit 12 can construct a proof stating that their SW product with version XYZ is not vulnerable anymore. The platform that is used to exchange the Verifiable Credentials (VCs) VEX proofs can be a one-to-one direct secure channel, or a service operated by 3rd party. Finally, the customer receiving the VEX can validated whether this is valid or not by using public HLI interfaces.

The verifiable credential and decentralized identifiers are structured according to a specification of the World Wide Web Consortium (W3C) and/or wherein the certification unit 13 performs actions of an issuer, the SW vendor unit performs actions of a holder, and the user unit performs actions of a verifier as specified by the World Wide Web Consortium (W3C).

The method and system have following advantages:
via the user unit 11 users or customers can query the distributed database unit 14 which is a "Trusted SBOM & VEX Query" interface, to understand whether the SW product is affected by a vulnerability or not. The distributed database unit 14 is not controlled by single entity, but set up and operated in a decentralized way. At the same time, the result exchanged can be verified by many user units.

Via the SW vendor unit 12 the Software vendors or integrators, i.e., company that develops the SW product or SW components of it, can disclose whether a vulnerability exits in their SW product or SW component without revealing the entire SBOM data structure to other interested parties. SW vendors need not upload their SBOM data structure into any database. A direct one-to-one sharing between the certification authorities is sufficient. At the same time a SW provider or integrator gains accountability and non-repudiation. It provides independent evaluation of whether a known vulnerability exists in their software, which can be verified by other stakeholders along the supply chain.

Software Suppliers, e.g., a company that develops a device or software, act as software vendors (providers), and their suppliers are integrators of this software. They might have a similar challenge of sharing their entire SBOM to the software integrator because they might have provided a compiled binary to the integrator. At the same time a SW provider or integrator gains accountability and non-repudiation. It provides independent evaluation of whether a known vulnerability exists in their software, which can be verified by other stakeholders along the supply chain. In addition, software suppliers also need to guarantee certain properties to the final vendors, e.g., compliance to standards such as secure coding without revealing again the entire information about their software.

Via the certification unit certification authorities e.g., TüV Süd simplify their auditing experience by having real-time access to validate if a software vendor is following the software vulnerability process or not. This provides a simplified certificate issuance and revocation.

For regulatory authorities, i.e., independent monitoring bodies, like ENISA/CERT can ensure that Regulatory authorities are functioning properly by validating their actions.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for trusted disclosure of vulnerability information to a software SW product, comprising
a) receiving (S1), by the SW vendor unit (12), a proof request from a user unit (11) to provide information on vulnerabilities of the SW product,
b1) requesting (S2), by the SW vendor unit (12), an evaluation of the SW product with respect to the requested information on vulnerabilities of all SW components indicated in a Software bill of materials data structure (SBOM) by sending the Software bill of material data structure (SBOM) comprising an indicator for each SW component contained in the SW product to a certification unit (13),
c1) receiving (S3), by the SW vendor unit (12), a verifiable credential comprising a result of the evaluation and a cryptographic proof issued from the certification unit (13), or
b2) retrieve (S2'), by the SW vendor unit (12), a previously received and stored verifiable credential issued from the certification unit (13) comprising the result of the evaluation and a cryptographic proof,
d) forwarding (S4), by the SW vendor unit (12), the cryptographical proof to the user unit (11),
e) requesting (S5), by the user unit (11), a public information to validate the cryptographic proof received from the SW vendor unit, from a distributed database (14), and
f) validating (S6), by the user unit (11), the cryptographic proof request from the SW vendor unit (12) about vulnerabilities in the software product using the public information from the distributed database (14).

2. Computer-implemented method according to claim 1, wherein the Software bill of material (SBOM) data structure is automatically generated by the SW vendor unit (12) according to a predefined structure.

3. Computer-implemented method according to any of the preceding claims, wherein the verifiable credential comprises a time information providing the time when the verifiable credential was issued by the certification unit (13).

4. Computer-implemented method according to any of the preceding claims, wherein a vulnerability evaluation schema is stored in the distributed database (14) and comprises a list of attributes which have to be provided from the SW vendor unit (12) to the certification unit (13) when requesting the evaluation of the SW product.

5. Computer-implemented method according to claim 4, wherein the vulnerability evaluation schema indicates at least one evaluation action which has to be performed in the certification unit (13) before issuing the verifiable credential.

6. Computer-implemented method according to claim 4, wherein the certification unit (13) requests to set up a credential definition data structure by binding a public key of the certification unit (13) to the vulnerability evaluation schema, wherein the credential definition data structure and a definition identifier identifying the credential definition data structure is stored in the distributed database (14).

7. Computer-implemented method according to claim 6, wherein the user unit (11) requests public information by sending the credential identifier to the distributed database (14) and receives in response at least the public key of the certification unit required to verify the proof.

8. Computer-implemented method according to any of the preceding claims, wherein the distributed database (14) is configured according to a public distributed database system, wherein the certification unit (13) and the SW vendor unit (12) have access to write into the distributed database, and the user unit (11) has access to read only data from the distributed database.

9. Computer-implemented method according to any of the preceding claims, wherein each of the certification unit (13) and the SW vendor unit (12) are identified by a public identifier, preferably a decentralized identifier.

10. Computer-implemented method according to any of the preceding claims, wherein the SW vendor unit (12) automatically collects all SW components of the SW product and sub-modules of the SW components according to the Vulnerability evaluation schema and sends it to the certification unit (13) for validating the Software bill of material SBOM data structure.

11. Computer-implemented method according to claim 6-10, wherein the certification unit (13) is one out of a group of more than one different certification units, each certification unit having a certification unit specific credential definition data structure and definition identifier respectively comprising the same vulnerability evaluation schema.

12. Computer-implemented method according to any of the preceding claims, wherein the verifiable credential and/or cryptographically protected proof is sent and/or forwarded in a one-to-one direct secure communication channel, or via a 3rd party service.

13. Computer-implemented method according to any of the preceding claims, wherein the verifiable credential and decentralized identifiers are structured according to a specification of the World Wide Web Consortium (W3C) and/or wherein the certification unit (13) performs actions of an issuer, the SW vendor unit performs actions of a holder, and the user unit (11) performs actions of a verifier as specified by the World Wide Web Consortium (W3C).

14. System for trusted disclosure of vulnerability information to a software product, comprising at least one user unit (11), at least one SW vendor unit (12), at least one certification unit (13) and a distributed database (14) configured to perform the steps according to claims 1-13.

15. A computer program product directly loadable into the internal memory of a digital computer, comprising software code portions for performing the steps of claims 1 - 13 when said product is run on said digital computer.
